# EUROPEAN PATENT SPECIFICATION

(11) **EP 4 039 416 B1**
(45) Date of publication and mention of the grant of the patent: **08.05.2024**
(21) Application number: 20871664.7
(22) Date of filing: 28.08.2020
(51) Int. Cl.: B25F 5/00, B25F 5/02, H01M 10/0562, H01M 50/20

(54) **ELECTRIC TOOL AND BATTERY PACK**
ELEKTROWERKZEUG UND BATTERIEPACK
OUTIL ÉLECTRIQUE ET BLOC-BATTERIE

(30) Priority: 30.09.2019 JP 2019179571
(43) Date of publication of application: 10.08.2022
(73) Proprietor: Panasonic Intellectual Property Management Co., Ltd., Osaka-shi, Osaka 540-6207 (JP)
(72) Inventor: MURUI, Itaru, Osaka-shi, Osaka 540-6207 (JP)
(74) Representative: Müller-Boré & Partner Patentanwälte PartG mbB
(86) International application number: PCT/JP2020/032516
(87) International publication number: WO 2021/065268

(56) References cited:
- WO-A1-2019/013032
- JP-A- 2018 183 874
- US-A1- 2017 326 720
- US-A1- 2019 252 728

## Description

### Technical Field

The present disclosure generally relates to an electric tool and a battery pack, and more particularly relates to an electric tool powered by a battery and a battery pack.

### Background Art

Patent Literature 1 discloses a rotary tool as a type of electric tool. The housing of this rotary tool is made up of: a cylinder portion (body portion) that houses a motor and a driving unit to be driven in rotation by the motor; and a grip portion provided to protrude from the cylinder portion. A battery pack serving as a power supply for the rotary tool is attached to the grip portion.

In a rotary tool of this type, as the weight of the battery pack increases with an increase in the capacity of the battery pack, the center of mass of the rotary tool shifts toward the battery pack, thus causing an increase in the reaction applied to the hand of the user who is holding the grip portion during machining work. This could cause a decline in the handiness of the rotary tool.
US 2017/326720 A1 describes a power tool including a motor housing that houses a motor, and a battery-mount part to which a battery pack having a rated voltage of 18 V is mountable. A ratio of the maximum width of the motor housing to the maximum width of the battery pack is 0.75 or less. A forward/reverse-switching lever is slidable in a left-right direction to change the rotational direction of the motor and is disposed between the motor housing and the battery pack. The maximum-slide position of the forward/reverse-switching lever in the left-right direction is inward of a ground plane when the power tool is laid horizontally on its side on the ground plane.
US 2019/252728 A1 describes a solid battery including at least one first laminate body in which a first electrolyte layer, a first positive electrode layer, a first current collecting layer, and a second positive electrode layer are laminated in this order; at least one second laminate body in which a second electrolyte layer, a first negative electrode layer, a second current collecting layer, and a second negative electrode layer are laminated in this order; a first insulating layer connected to at least part of a side surface portion of the first laminate body; and a second insulating layer connected to at least part of a side surface portion of the second laminate body. Each of the first current collecting layer and the second current collecting layer has ionic conductivity of 10-7 S/cm or lower, and each of the first insulating layer and the second insulating layer has ionic conductivity of 10-7 S/cm or lower.

### Citation List

### Patent Literature

Patent Literature 1: JP 2005-169532 A

### Summary of Invention

An object of the present disclosure is to provide an electric tool and a battery pack, both of which may contribute to increasing the degree of handiness.

The claimed invention is defined by the features set forth in the appended independent claim. Particular embodiments are set forth in the dependent claims.

### Brief Description of Drawings

FIG. 1 is a side view of an electric tool according to an exemplary embodiment of the present disclosure;
FIG. 2 illustrates a state where the electric tool is used;
FIG. 3 is a side view illustrating a state where a battery pack is yet to be attached to a grip portion of the electric tool;
FIG. 4 is a perspective view of a main part of the electric tool;
FIG. 5 illustrates a state where the electric tool is used;
FIG. 6 is a perspective view of a battery pack included in the electric tool;
FIG. 7 is a side view of another battery pack included in the electric tool;

### Description of Embodiments

### (Embodiment)

### (1) Overview

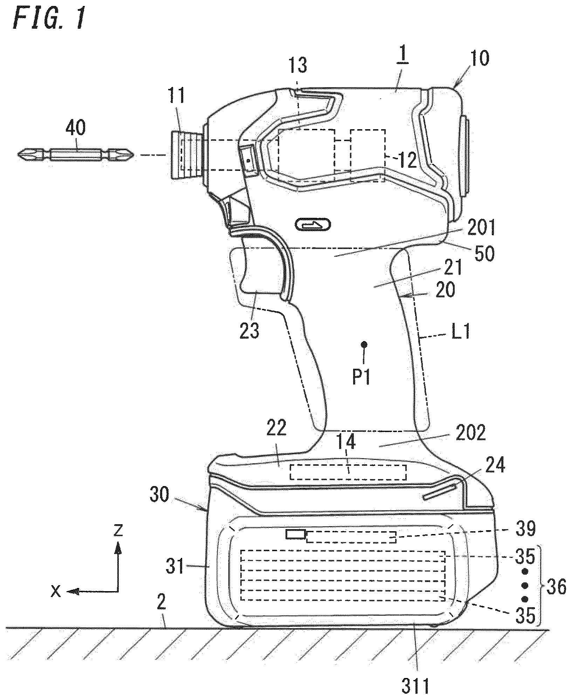

An electric tool 1 according to an exemplary embodiment is a handheld electric tool as shown in FIGS. 1-3. The electric tool 1 may be implemented as, for example, an electric screwdriver, an electric drill, an electric wrench, or an electric grinder.

The electric tool 1 includes a body portion 10, a grip portion 20, and a battery pack 30.

The body portion 10 includes: a tool attachment member 11 to which a tool 40 is attached; a driving unit 12 to drive the tool 40; and a transmission unit 13 to transmit the driving force of the driving unit 12 to the tool 40.

The grip portion 20 is provided for the body portion 10 and includes a gripping part 21 designed to be held by a user with his or her hand.

At least part of the battery pack 30 is provided at one end portion 202, located opposite from the body portion 10, of the grip portion 20. The battery pack 30 supplies power to the driving unit 12. The battery pack 30 includes: a connection terminal portion 33 to be electrically connected to the driving unit 12 when the battery pack 30 is attached to the grip portion 20; and a power storage unit 36. The power storage unit 36 includes an all-solid-state battery 35 electrically connected to the connection terminal portion 33.

The battery pack 30 includes the all-solid-state battery 35, which is lighter in weight than a liquid battery such as a lithium-ion battery, provided that their capacities are the same. This reduces the chances of allowing, even when the capacity of the battery pack 30 is increased, the center of mass of the electric tool 1 to shift toward the battery pack 30. This makes it easier to keep, even when the capacity of the battery pack 30 is increased, the center of mass of the electric tool 1 located in the grip portion 20. Thus, the reaction applied to the hand of the user who grips the grip portion 20 during machining work may be reduced, compared to a situation where the center of mass of the electric tool 1 is located outside of the grip portion 20. This enables providing an electric tool 1 which is easier to handle, and therefore, may contribute to increasing its handiness. Note that the all-solid-state battery 35 is a battery in which a solid electrolyte is in charge of conduction of ions between its anode and cathode. Using the all-solid-state battery 35 reduces the chances of causing leakage of the electrolyte, compared to using a liquid battery. Consequently, an electric tool 1 contributing to reducing the risk of causing damage may be provided.

The battery pack 30 provided for the electric tool 1 includes a battery case 31 to house the all-solid-state battery 35 therein.

The battery pack 30 includes the all-solid-state battery 35, which is lighter in weight than a liquid battery such as a lithium-ion battery, provided that their capacities are the same. This reduces the chances of allowing, even when the capacity of the battery pack 30 is increased, the center of mass of the electric tool 1 to shift toward the battery pack 30. This makes it easier to keep, even when the capacity of the battery pack 30 is increased, the center of mass of the electric tool 1 located in the grip portion 20. Thus, the reaction applied to the hand of the user who grips the grip portion 20 during machining work may be reduced, compared to a situation where the center of mass of the electric tool 1 is located outside of the grip portion 20. This enables providing a battery pack 30 which makes the electric tool 1 easier to handle, and therefore, may contribute to increasing the handiness of the electric tool 1.

### (2) Details

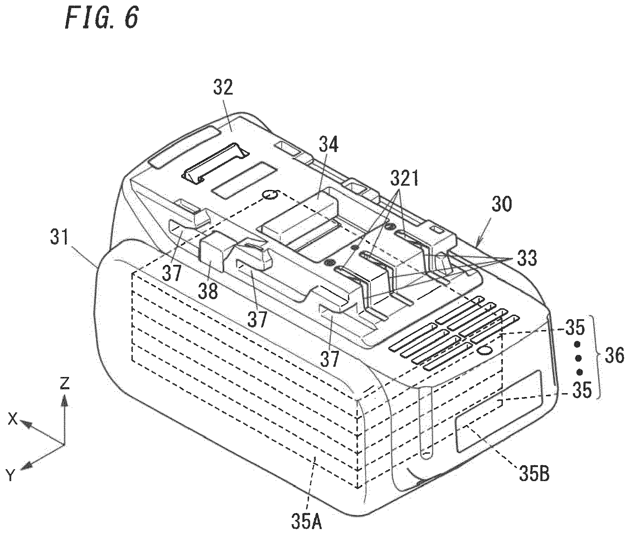

Next, the configuration of an electric tool according to an exemplary embodiment will be described in detail with reference to FIGS. 1-7. Note that the numerical values, shapes, materials, positions of constituent elements, relative positions between the constituent elements, their connection, and other specifics to be described below are all examples and should not be construed as limiting the scope of the present disclosure. The drawings to be referred to in the following description of embodiments are all schematic representations. That is to say, the ratio of the dimensions (including thicknesses) of respective constituent elements illustrated on the drawings does not always reflect their actual dimensional ratio. Also, in the following description, the X-axis direction and Z-axis direction shown in FIGS. 1, 3, and 6 will define the forward/backward direction and upward/downward direction, respectively, and the Y-axis direction shown in FIG. 6 will define the rightward/leftward direction. More specifically, the positive X-axis direction will define the forward direction, the positive Y-axis direction will define the rightward direction, and the positive Z-axis direction will define the upward direction. However, these directions are only examples and should not be construed as limiting the direction in which the electric tool 1 is used. Furthermore, the arrows shown on the drawings to indicate the respective directions are just given there as an assistant to description and are insubstantial ones.

The electric tool 1 includes the body portion 10, the grip portion 20, and the battery pack 30 as shown in FIGS. 1-7. In this embodiment, the body portion 10 and the grip portion 20 are provided integrally with each other and a tool body 50 is made up of the body portion 10 and the grip portion 20.

### (2.1) Tool body

First, the tool body 50 made up of the body portion 10 and the grip portion 20 will be described.

The body portion 10 may be, for example, a molded product of a synthetic resin with electrical insulation properties. The body portion 10 is formed in the shape of a cylinder extending in the forward/backward direction.

At the frontend of the body portion 10, provided is the tool attachment member 11, to which a tool 40 such as a tip tool is attached. Inside the body portion 10, housed are the driving unit 12 and the transmission unit 13 described above.

The tool attachment member 11 is provided for the body portion 10 to be rotatable around a rotational axis aligned with the forward/backward direction. Multiple different types of tools 40 are provided for various types of machining work to be done using this electric tool 1. Any desired one of the tools 40 may be selectively attached to the tool attachment member 11 and used to have an intended type of machining work done. Examples of such types of tools 40 include a screwdriver bit for fastening a screw, a drill bit for drilling a hole, and a socket for fastening a nut.

The driving unit 12 includes an electric motor to be driven with the electric power supplied from the battery pack 30.

The transmission unit 13 transmits the driving force of the driving unit 12 to the tool attachment member 11. The transmission unit 13 is coupled to an output shaft of the driving unit 12 and transmits the rotational force of the driving unit 12 to the tool attachment member 11, thereby rotating the tool attachment member 11. Optionally, the transmission unit 13 may include a speed reducer mechanism, a clutch mechanism, and an impact mechanism, for example.

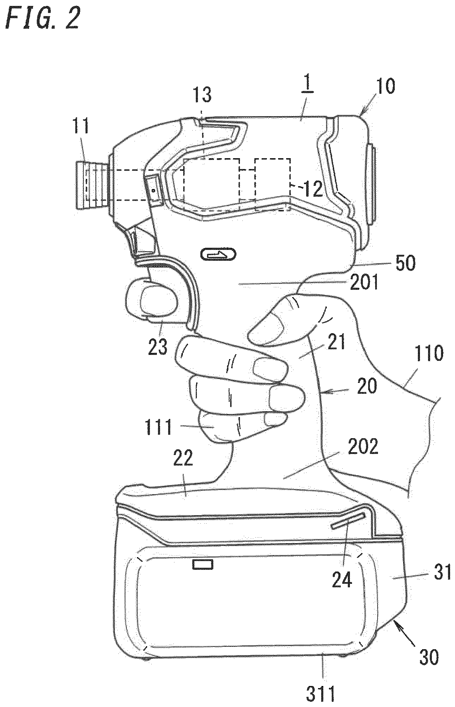

The grip portion 20 extends downward from a part of the peripheral surface of the body portion 10. The longitudinal axis of the grip portion 20 is aligned with the upward/downward direction. At the middle of the grip portion 20 in the upward/downward direction (at the middle of its length), provided is the gripping part 21 to be held by the user with his or her hand 110 (see FIG. 2). The part surrounded with the two-dot chain L1 (see FIG. 1) of the grip portion 20 is the gripping part 21. The grip portion 20 includes two end portions 201, 202, the upper one 201 of which is located opposite from the lower one 202 with respect to the gripping part 21. The upper end portion 201 is connected to the body portion 10. At the lower end portion 202, provided is a battery attachment portion 22 to which the battery pack 30 is attached.

A trigger 23 is provided on a front portion of the gripping part 21 of the grip portion 20 to be located adjacent to the end portion 201 connected to the body portion 10. The trigger 23 is an operating member that accepts an operating command entered by the user to control the rotation of the driving unit 12. The trigger 23 may be operated by the user with the index finger, for example, of his or her hand 110 holding the grip portion 20.

The battery attachment portion 22 is provided integrally with the lower end portion 202 of the grip portion 20. The battery attachment portion 22 is formed to protrude perpendicularly to the upward/downward direction from the lower end portion 202 of the grip portion 20. The battery attachment portion 22 is formed in the shape of a box, of which the dimension in the upward/downward direction is smaller than its dimension in the forward/backward direction and its dimension in the rightward/leftward direction. To the bottom of the battery attachment portion 22, the battery pack 30 is attached removably. The lower surface of the battery attachment portion 22 is provided with a recess into which an upper portion of the battery pack 30 is inserted. That is to say, in this embodiment, out of the two end portions 201, 202, interposing the gripping part 21 between themselves, of the grip portion 20, the body portion 10 is connected to one end portion 201 and the battery pack 30 is attached to the other end portion 202.

In this embodiment, a control unit 14 (see FIG. 1), including a circuit board on which a circuit for controlling the driving unit 12 and other components are mounted, is housed inside the battery attachment portion 22. In response to the operation of pulling the trigger 23, the control unit 14 may switch the ON/OFF states of the driving unit 12. In addition, according to the manipulative variable of the operation of pulling the trigger 23 (i.e., depending on how deep the trigger 23 has been pulled), the control unit 14 also controls the rotational velocity of the driving unit 12 (i.e., the rotational velocity of the tool 40 attached to the tool attachment member 11).

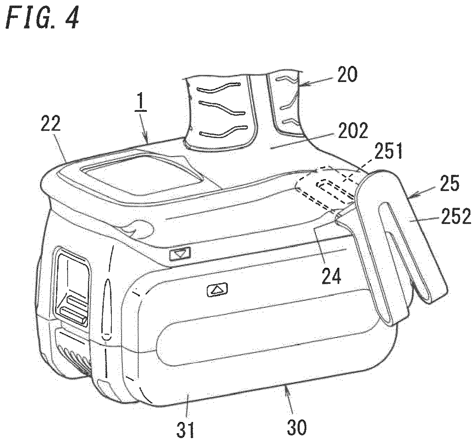

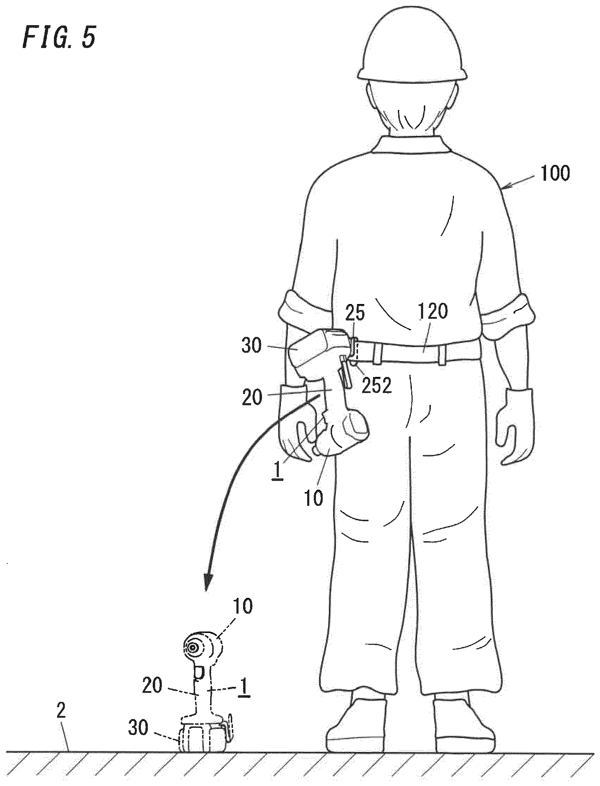

In addition, a suspension fitting 25 (see FIG. 4) for use to suspend the electric tool 1 from, for example, a working belt 120 (see FIG. 5) of the user 100 of the electric tool 1 is attached to the battery attachment portion 22. The suspension fitting 25 includes a fixing portion 251 to be inserted into a hole 24 provided through a side surface of the battery attachment portion 22 and fixed to the battery attachment portion 22 with a screw, for example, and a U-hook 252, one end portion of which is coupled to the fixing portion 251. Hooking the hook 252 on his or her working belt 120, for example, allows the user 100 to move or do some type of work other than the machining work that requires the use of the electric tool 1, while suspending the electric tool 1 from the working belt 120.

Furthermore, if the suspension fitting 25 came off the working belt 120 to cause the electric tool 1 to fall off to the ground as shown in FIG. 5 in a situation where the electric tool 1 is suspended from the working belt 120, then significant impact could be applied to the battery pack 30 of the electric tool 1 that has fallen. Nevertheless, the battery pack 30 according to this embodiment includes the power storage unit 36 including the all-solid-state batteries 35, thus reducing the chances of causing liquid leakage that would happen if the battery pack 30 included liquid batteries and thereby reducing the risk of causing damage.

In this embodiment, the suspension fitting 25 is provided for the grip portion 20. Alternatively, the suspension fitting 25 may be attached to the body portion 10. That is to say, the electric tool 1 may include the suspension fitting 25 which is attached to at least one of the body portion 10 or the grip portion 20 to suspend the electric tool 1 from an object. This allows the electric tool 1 to be held suspended from the object.

### (2.2) Battery pack

The battery pack 30 serving as a power supply for the electric tool 1 will be described with reference to FIGS. 1-7.

The battery pack 30 serves as a power supply that allows the electric tool 1 to operate. The battery pack 30 includes the power storage unit 36 including the all-solid-state batteries 35 and the battery case 31 to house the power storage unit 36 therein. The battery case 31 is a molded product of a synthetic resin having electrical insulation properties and is formed in the shape of a box.

In the upper part of the battery case 31, a rectangular parallelepiped fitting portion 32, which is raised by one step with respect to right and left side portions, is provided along a centerline in the rightward/leftward direction as shown in FIG. 6. At the frontend of the fitting portion 32, three slits 321 are provided to be spaced apart from each other in the rightward/leftward direction. Each slit 321 is provided through the front and upper surfaces of the fitting portion 32 and extends in the forward/backward direction. Inside each slit 321, provided is a connection terminal portion 33 to be electrically connected to a feeder connection terminal provided in a lower part of the grip portion 20. Each connection terminal portion 33 is electrically connected to the power storage unit 36 housed inside the battery case 31. In addition, on the upper surface of the fitting portion 32, provided is a second connector 34 to be electrically connected to a first connector for transmitting signals, which is provided in the lower part of the grip portion 20. The second connector 34 is electrically connected to, for example, a circuit board 39 (see FIG. 1) housed inside the battery case 31. The circuit board 39 acquires battery information about the battery pack 30 (such as the voltage value and temperature of the power storage unit 36) and outputs the battery information to the control unit 14 provided inside the battery attachment portion 22. Furthermore, the right and left side surfaces of the fitting portion 32 have a plurality of insert grooves 37, to which a plurality of hook pieces 26 (see FIG. 4) provided inside a recess on the lower surface of the battery attachment portion 22 are respectively inserted.

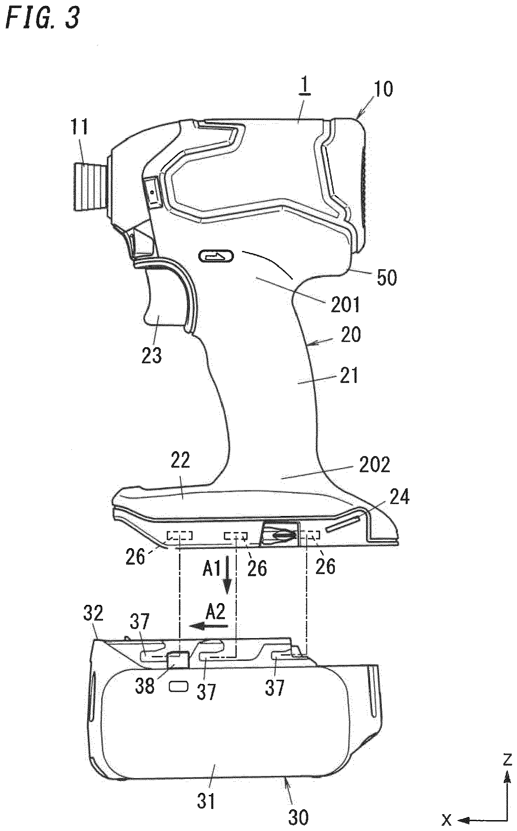

In this embodiment, to attach the battery pack 30 to the battery attachment portion 22, the tool body 50 is moved downward (as indicated by the arrow A1 in FIG. 3) from over the battery pack 30 as shown in FIG. 3, thereby inserting the fitting portion 32 of the battery pack 30 into the recess on the lower surface of the battery attachment portion 22. Thereafter, sliding the tool body 50 forward (as indicated by the arrow A2 in FIG. 3) with respect to the battery pack 30 allows the hook pieces 26 of the battery attachment portion 22 to be inserted into the insert grooves 37. A lock piece 38 is disposed behind the frontmost one of the plurality of insert grooves 37. The lock piece 38 is biased upward by an elastic member such as a spring. When the battery pack 30 is attached to the battery attachment portion 22, the lock piece 38 is pressed downward by the hook piece 26, thus allowing the hook piece 26 to move inside the insert groove 37. Thereafter, when the hook piece 26 reaches the deepest part of the insert groove 37, the lock piece 38 is pressed by the spring to move upward and reach the vicinity of the rear opening of the insert groove 37. As a result, attempting to slide the tool body 50 backward with respect to the battery pack 30 brings the hook piece 26 inserted into the front insert groove 37 into contact with the lock piece 38, thus regulating the backward slide of the tool body 50. This allows the battery pack 30 to be kept attached to the battery attachment portion 22.

In a state where the battery pack 30 is attached to the battery attachment portion 22, the connection terminal portion 33 is electrically connected to the connection terminals of the battery attachment portion 22 and power required for operation is supplied from the power storage unit 36 to the control unit 14, the driving unit 12, and other components. In addition, the second connector 34 is electrically connected to the first connector of the battery attachment portion 22, the circuit board 39 housed in the battery case 31 and the control unit 14 are also electrically connected to each other, and the battery information is output from the circuit board 39 to the control unit 14.

On the other hand, to remove the battery pack 30 from the battery attachment portion 22, an operating member provided for the battery case 31 is operated to move the lock piece 38 downward and make the hook pieces 26 ready to move out of the insert grooves 37. In this state, the tool body 50 is slid backward (i.e., in the direction opposite from the one indicated by the arrow A2 in FIG. 3) with respect to the battery pack 30 to move the hook pieces 26 out of the insert grooves 37. Then, moving the tool body 50 upward (i.e., in the direction opposite from the one indicated by the arrow A1 in FIG. 3) with respect to the battery pack 30 allows the battery pack 30 to be removed from the tool body 50.

As can be seen, according to this embodiment, the battery pack 30 is attachable to, and removable from, the grip portion 20 (of the tool body 50). Thus, when the battery level of the battery pack 30 becomes low, the user just needs to remove the battery pack 30 from the grip portion 20 and attach a charged battery pack 30 as a replacement to the grip portion 20. This allows the user to continue his or her machining work using the electric tool 1.

Furthermore, the battery pack 30 is attached to the end portion 202 of the grip portion 20 which is located adjacent to the little finger 111 of the user 100 who grips the grip portion 20 as shown in FIG. 2. Thus, the end portion 201, located adjacent to the thumb of the user 100, of the grip portion 20 is connected to the body portion 10, thus achieving the address of allowing the user 100 to focus on the target more easily with his or her eyes while he or she is doing machining work with the tool 40 brought into contact with the workpiece.

The power storage unit 36 is made up of a plurality of all-solid-state batteries 35, each of which is formed in a sheet shape as shown in FIGS. 1 and 6. The plurality of all-solid-state batteries 35 are connected in either series or parallel according to the voltage or capacity required. In this embodiment, the power storage unit 36 includes five all-solid-state batteries 35 which are connected together in series. However, the number and connection mode (which is either series or parallel) of the all-solid-state batteries 35 that form the power storage unit 36 may be changed as appropriate according to the voltage or capacity required.

In this embodiment, the respective weights of the body portion 10 and the battery pack 30 are set such that the center of mass P1 (see FIG. 1) of the electric tool 1 is located in the grip portion 20. Recently, as electric motors have had their size reduced and their output increased, attempts have been made to reduce the weight of the body portion 10 that houses the driving unit 12. Meanwhile, there have been increasing demands for increasing the capacity of the battery pack 30 to extend the maximum operating hours. As the capacity of the battery pack 30 has been increased to meet such demands, the battery pack 30 tends to increase its weight. In this manner, as the battery pack 30 increases its weight while the body portion 10 has its weight reduced, the center of mass of the electric tool 1 could shift toward the battery pack 30. If the center of mass of the electric tool 1 is located in the vicinity of the battery pack 30, the reaction applied to the hand 110 of the user who is holding the grip portion 20 during the machining work increases. In this embodiment, the power storage unit 36 includes the all-solid-state battery 35 which is lighter in weight than a liquid battery such as a lithium-ion battery, thus reducing an increase in the weight of the battery pack 30 while contributing to increasing the capacity, compared to a situation where the power storage unit 36 includes a liquid battery. This enables, even when the capacity of the battery pack 30 is increased, keeping the center of mass P1 of the electric tool 1 located in the gripping part 21 of the grip portion 20 and thereby reducing the reaction applied to the hand of the user who is holding the grip portion 20 during the machining work. Consequently, this embodiment contributes to increasing the handiness of the electric tool 1.

As described above, out of the two end portions 201, 202, interposing the gripping part 21 between them, of the grip portion 20, the body portion 10 is connected to one end portion 201 and the battery pack 30 is attached to the other end portion 202. The electric tool 1 of this type may stand by itself in its entirety (i.e., including the body portion 10, grip portion 20, and battery pack 30 thereof) with the bottom surface 311, opposite from the grip portion 20, of the battery pack 30 put on the ground 2 (mounting surface) as shown in FIG. 1. The battery pack 30 includes the connection terminal portion 33 to be electrically connected to the driving unit 12 when the battery pack 30 is attached to the grip portion 20 and the power storage unit 36 electrically connected to the connection terminal portion 33. The power storage unit 36 includes a plurality of all-solid-state batteries 35, each of which is formed in a sheet shape, and which are stacked one on top of another. In this case, if impact force is applied to the power storage unit 36 perpendicularly to the direction in which the all-solid-state batteries 35 are stacked one on top of another, then peeling or misalignment will occur between the plurality of all-solid-state batteries 35 that are stacked one on top of another, thus possibly causing instability in electrical connection between the plurality of all-solid-state batteries 35. On the other hand, if impact force is applied to the power storage unit 36 in the direction in which the all-solid-state batteries 35 are stacked one on top of another, then peeling or misalignment will rarely occur between the plurality of all-solid-state batteries 35 that are stacked one on top of another, thus reducing the chances of causing instability in electrical connection between the plurality of all-solid-state batteries 35. In this embodiment, the direction in which the plurality of all-solid-state batteries 35 are stacked one on top of another is aligned with the line that connects together the two end portions 201, 202, interposing the gripping part 21 between them, of the grip portion 20 (i.e., the Z-axis direction). This reduces the damage to be done to the power storage unit 36 by the impact applied to the power storage unit 36 in the direction aligned with the Z-axis direction.

Furthermore, in this embodiment, the direction in which the plurality of all-solid-state batteries 35 are stacked one on top of another is aligned with a direction perpendicular to the bottom surface 311 of the battery pack 30. As used herein, the "direction perpendicular to the bottom surface 311" refers to the direction perpendicular to the mounting surface (e.g., the floor surface 2) on which the electric tool 1 is mounted (i.e., the upward/downward direction) and is the Z-axis direction shown in FIG. 1. Therefore, if the electric tool 1 is put with impetus onto the mounting surface, then impact force is applied in the direction in which the plurality of all-solid-state batteries 35 are stacked one on top of another, thus reducing the chances of causing peeling or misalignment between the plurality of all-solid-state batteries 35 that are stacked one on top of another. This may reduce the chances of causing deterioration in the electrical performance of the battery pack 30.

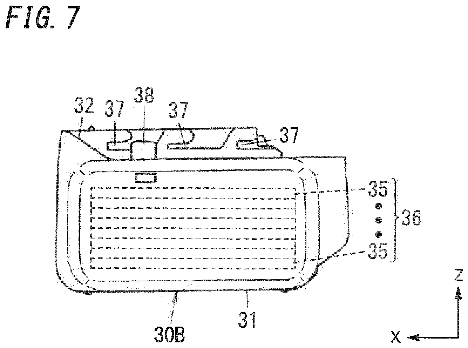

Also, in this battery pack 30, the number, area, and connection mode of the all-solid-state batteries 35 that form the power storage unit 36 may be changed as appropriate according to the voltage and capacity required. The voltage value of the power storage unit 36 depends on, for example, the voltage values of the respective all-solid-state batteries 35 and the number of the all-solid-state batteries 35 that are connected together in series. The capacity of the power storage unit 36 depends on, for example, the respective areas of the all-solid-state batteries 35 and the number of the all-solid-state batteries 35 that are connected together in parallel. For example, FIG. 7 is a side view of a battery pack 30B including a power storage unit 36 in which eight all-solid-state batteries 35 are connected together in series. In this battery pack 30B, a larger number of all-solid-state batteries 35 are connected together in series than in the battery pack 30 described above, and therefore, the voltage when the battery pack 30B is fully charged is set at a higher voltage than in the battery pack 30. Note that the number of the battery packs of different types does not have to be two. Rather, multiple different types of battery packs 30, of which respective voltage values and/or capacities are different from each other, are suitably prepared. In that case, one battery pack 30, selected from the multiple different types of battery packs 30, may be attached to the grip portion 20 (of the tool body 50). This allows the electric tool 1 to be used with a battery pack 30 with any desired voltage value or capacity attached to the grip portion 20.

Furthermore, each of the plurality of all-solid-state batteries 35 has a rectangular sheet shape. As shown in FIG. 6, the longitudinal axis of the plurality of all-solid-state batteries 35 is aligned with the orientation of the tool 40 attached to the tool attachment member 11 (i.e., the forward/backward direction in this embodiment). That is to say, the plurality of all-solid-state batteries 35 are arranged such that their longer side 35A is aligned with the X-axis direction and their shorter side 35B is aligned with the Y-axis direction. This enables reducing, compared to a situation where the plurality of all-solid-state batteries 35 are arranged such that their longer side 35A is perpendicular to the orientation of the tool 40 (i.e., the forward/backward direction), the width of the battery pack 30 as measured perpendicularly to the orientation of the tool 40 with the tool 40 pointed at the workpiece.

### (2.3) Method of use

The electric tool 1 according to this embodiment is made usable by attaching the battery pack 30 to the battery attachment portion 22 of the grip portion 20. Note that a tool 40 suitable for the type of the machining work that the user 100 is going to do is attached by the user 100 to the tool attachment member 11.

When the user 100 has not pulled the trigger 23 yet, the control unit 14 keeps the driving unit 12 deactivated and does not rotate the tool attachment member 11.

On the other hand, when the user 100 pulls the trigger 23, the control unit 14 starts driving the driving unit 12 in rotation, thereby turning the tool 40 attached to the tool attachment member 11. At this time, the control unit 14 controls, based on the manipulative variable of the operation of pulling the trigger 23, the rotational velocity of the driving unit 12 (i.e., the rotational velocity of the tool attachment member 11). This allows the user 100 to have any desired type of machining work done using the electric tool 1 by performing the operation of pulling the trigger 23.

### (3) Variations

Next, variations of the exemplary embodiment described above will be enumerated one after another. Note that the variations to be described below may be adopted in combination as appropriate.

The electric tool 1 according to the exemplary embodiment described above is a so-called "gun type" electric tool. However, this is only an example and should not be construed as limiting.

The shape of the electric tool may be modified as appropriate.

Optionally, in the exemplary embodiment and variations described above, a buffer member made of synthetic rubber, for example, may be provided between the inner surface of the battery case 31 and the power storage unit 36 to reduce the impact applied to the power storage unit 36.

Furthermore, in the exemplary embodiment and variations described above, the battery pack 30 may or may not be one of the constituent elements of the electric tool 1.

### (Recapitulation)

According to the claimed invention, the battery pack (30) includes an all-solid-state battery (35), which is lighter in weight than a liquid battery, provided that their capacities are the same. This reduces the chances of allowing, even when the capacity of the battery pack (30) is increased, the center of mass of the electric tool (1) to shift toward the battery pack (30). This makes it easier to keep, even when the capacity of the battery pack (30) is increased, the center of mass of the electric tool (1) located in the grip portion (20). Thus, the reaction applied to the hand of the user who grips the grip portion (20) during machining work may be reduced, compared to a situation where the center of mass of the electric tool (1) is located outside of the grip portion (20). This enables providing an electric tool (1) that may contribute to increasing its handiness. This aspect also provides an electric tool (1) in which the body portion (10) is connected to the first end portion (201) of the grip portion (20) and the battery pack (30) is attached to the second end portion (202) of the grip portion (20). Moreover, if the impact force in a direction aligned with a line segment that connects together both end portions (201, 202) of the grip portion (20) is applied to a battery pack (30), then the impact force is applied in the direction in which the plurality of all-solid-state batteries (35) are stacked one on top of another. Therefore, the chances of causing peeling or misalignment between the plurality of all-solid-state batteries (35) that are stacked one on top of another are reduced. This may reduce the chances of causing deterioration in the electrical performance of the battery pack (30).

In an electric tool (1) according to a further aspect, which may be implemented in conjunction with the first aspect, the battery pack (30) is attachable to, and removable from, the grip portion (20).

This aspect enables attaching the battery pack (30) to the grip portion (20) provided for the body portion (10).

In an electric tool (1) according to a further aspect, which may be implemented in conjunction with any one of the first to third aspects, a center of mass of the electric tool (1) is located in the grip portion (20).

This aspect may reduce the reaction applied to the hand (110) of the user who grips the grip portion (20) during machining work, compared to a situation where the center of mass of the electric tool (1) is located outside of the grip portion (20).

In an electric tool (1) according to a further aspect, which may be implemented in conjunction with any one of the first to fourth aspects, the battery pack (30) is attached to the one end portion (202) of the grip portion (20). The one end portion (202) is located adj acent to a little finger (111) of the user (100) who grips the grip portion (20).

According to this aspect, the first end portion (201), located adjacent to the thumb of the user (100), of the grip portion (20) is connected to the body portion (10), thus allowing the user (100) to focus on the target more easily with his or her eyes while he or she is doing machining work with the tool (40) brought in contact with the workpiece.

According to an aspect, the battery pack (30) includes an all-solid-state battery (35), which is lighter in weight than a liquid battery, provided that their capacities are the same. This reduces the chances of allowing, even when the capacity of the battery pack (30) is increased, the center of mass of the electric tool (1) to shift toward the battery pack (30). This makes it easier to keep, even when the capacity of the battery pack (30) is increased, the center of mass of the electric tool (1) located in the grip portion (20). Thus, the reaction applied to the hand of the user who grips the grip portion (20) during machining work may be reduced, compared to a situation where the center of mass of the electric tool (1) is located outside of the grip portion (20). This enables providing a battery pack (30) that may contribute to increasing the handiness of the electric tool (1).

Note that the constituent elements according to the second to fifth aspects are not essential constituent elements for the electric tool (1) but may be omitted as appropriate.

### Reference Signs List

- 1: Electric Tool
- 10: Body Portion
- 11: Tool Attachment Member
- 12: Driving Unit
- 13: Transmission Unit
- 20: Grip Portion
- 21: Gripping Part
- 30: Battery Pack
- 31: Battery Case
- 33: Connection Terminal Portion
- 35: All-Solid-State Battery
- 36: Power Storage Unit
- 40: Tool
- 100: User
- 110: Hand
- 111: Little Finger
- 201, 202: End Portion

## Claims

1. An electric tool (1) comprising:
a body portion (10) including: a tool attachment member (11) to which a tool (40) is attached; a driving unit (12) configured to drive the tool (40); and a transmission unit (13) configured to transmit driving force of the driving unit (12) to the tool (40);
a grip portion (20) provided for the body portion (10) and including a gripping part (21) designed to be held by a user with his or her hand; and
a battery pack (30), at least part of which is provided at one end portion, located opposite from the body portion (10), of the grip portion (20), the battery pack (30) being configured to supply power to the driving unit (12),
the battery pack (30) includes:
a connection terminal portion (33) configured to be electrically connected to the driving unit (12) when the battery pack (30) is attached to the grip portion (20); and
the grip portion (20) includes: a first end portion (201); and a second end portion (202) located opposite from the first end portion (201) with respect to the gripping part (21) and serving as the one end portion, the body portion (10) being connected to the first end portion (201), the battery pack (30) being attached to the second end portion (202), **characterised in that**, a power storage unit (36) including an all-solid-state battery (35) is electrically connected to the connection terminal portion (33),
the battery pack (30) includes a plurality of all-solid-state batteries (35), each of the plurality of all-solid-state batteries (35) being formed in a sheet shape,
the plurality of all-solid-state batteries (35) are being stacked one on top of another, and
a direction in which the plurality of all-solid-state batteries (35) are stacked one on top of another is aligned with a line segment that connects together the first end portion (201) and the second end portion (202), interposing the gripping part (21), of the grip portion (20).

2. The electric tool (1) of claim 1, wherein
the battery pack (30) is attachable to, and removable from, the grip portion (20).

3. The electric tool (1) of claim 1 or 2, wherein
a center of mass of the electric tool (1) is located in the grip portion (20).

4. The electric tool (1) of any one of claims 1 to 3, wherein
the battery pack (30) is attached to the one end portion of the grip portion (20), the one end portion being located adjacent to a little finger of the user who grips the grip portion (20).

## Patentansprüche

1. Elektrowerkzeug (1), aufweisend:
einen Körperabschnitt (10) mit: einem Werkzeugbefestigungselement (11), an dem ein Werkzeug (40) befestigt ist; einer Antriebseinheit (12), die zum Antreiben des Werkzeugs (10) konfiguriert ist; und einer Übertragungseinheit (13), die zum Übertragen der Antriebskraft von der Antriebseinheit (12) an das Werkzeug (40) konfiguriert ist;
einen Griffabschnitt (20), der für den Körperabschnitt (10) vorgesehen ist und einen Greifteil (21) aufweist, der ausgelegt ist, von einem Benutzer mit seiner Hand gehalten zu werden; und
eine Batterieeinheit (30), von der zumindest ein Teil an einem Endabschnitt, der sich gegenüber dem Körperabschnitt (10) befindet, des Griffabschnitts (20) angeordnet ist, wobei die Batterieeinheit (30) derart konfiguriert ist, dass sie der Antriebseinheit (12) Strom zuführt,
die Batterieeinheit (30) aufweist:
einen Verbindungsanschlussabschnitt (33), der konfiguriert ist, elektrisch mit der Antriebseinheit (12) verbunden zu werden, wenn die Batterieeinheit (30) an dem Griffabschnitt (20) befestigt ist; und
der Griffabschnitt (20) aufweist: einen ersten Endabschnitt (201); und einen zweiten Endabschnitt (202), der in Bezug auf den Greifteil (21) gegenüber dem ersten Endabschnitt (201) angeordnet ist und als ein Endabschnitt dient, wobei der Körperabschnitt (10) mit dem ersten Endabschnitt (201) verbunden ist, wobei die Batterieeinheit (30) an dem zweiten Endabschnitt (202) befestigt ist,
**dadurch gekennzeichnet, dass**
eine Energiespeichereinheit (36), die eine Voll-Feststoff-Batterie (35) aufweist, elektrisch mit dem Verbindungsanschlussabschnitt (33) verbunden ist,
die Batterieeinheit (30) eine Vielzahl von Voll-Feststoff-Batterien (35) aufweist, wobei jede Batterie unter der Vielzahl von Voll-Feststoff-Batterien (35) in einer Blattform ausgebildet ist,
die Vielzahl von Voll-Feststoff-Batterien (35) übereinander gestapelt werden, und
eine Richtung, in der die Voll-Feststoff-Batterien (35) übereinander gestapelt sind, mit einem Linien-Segment ausgerichtet ist, das den ersten Endabschnitt (201) und den zweiten Endabschnitt (202), die den Greifteil (21) umgeben, des Griffabschnitts (20) verbindet.

2. Elektrowerkzeug (1) nach Anspruch 1, wobei
die Batterieeinheit (30) an dem Griffabschnitt (20) befestigt werden kann und von diesem gelöst werden kann.

3. Elektrowerkzeug (1) der Ansprüche 1 oder 2, wobei
sich ein Schwerpunkt des Elektrowerkzeugs (1) in dem Griffabschnitt (20) befindet.

4. Elektrowerkzeug (1) nach einem der Ansprüche 1 bis 3, wobei
die Batterieeinheit (30) an dem einen Endabschnitt des Griffabschnitts (20) befestigt ist, wobei sich der Endabschnitt neben einem kleinen Finger des Benutzers befindet, der den Griffabschnitt (20) ergreift.

## Revendications

1. Outil électrique (1) comprenant :
une partie corps (10) comportant : un élément (11) de fixation d'outil auquel un outil (40) est fixé ; une unité d'entraînement (12) conçue pour entraîner l'outil (10) ; et une unité de transmission (13) conçue pour transmettre la force d'entraînement de l'unité d'entraînement (12) à l'outil (40) ;
une partie de saisie (20) prévue pour la partie corps (10) et comportant une partie de préhension (21) destinée à être tenue par un utilisateur à l'aide de sa main ; et
un bloc-batterie (30), dont au moins une partie est disposée au niveau d'une section d'extrémité, située à l'opposé de la partie corps (10), de la partie de saisie (20), le bloc-batterie (30) étant conçu pour alimenter en énergie l'unité d'entraînement (12),
le bloc-batterie (30) comprenant :
une partie borne de connexion (33) conçue pour être connectée électriquement à l'unité d'entraînement (12) lorsque le bloc-batterie (30) est fixé à la partie de saisie (20) ; et
la partie de saisie (20) comprenant : une première partie d'extrémité (201) ; et une seconde partie d'extrémité (202) située à l'opposé de la première partie d'extrémité (201) par rapport à la partie de préhension (21) et servant en tant que section d'extrémité, la partie corps (10) étant reliée à la première partie d'extrémité (201), le bloc-batterie (30) étant fixé à la seconde partie d'extrémité (202),
**caractérisé en ce que**
une unité de stockage d'énergie (36), comportant une batterie entièrement solide (35), est connectée électriquement à la partie borne de connexion (33),
le bloc-batterie (30) comprend une pluralité de batteries entièrement solides (35), chaque batterie parmi la pluralité de batteries entièrement solides (35) prenant une forme de feuille,
les batteries entièrement solides (35) sont empilées l'une sur l'autre, et
une direction dans laquelle les batteries entièrement solides (35) sont empilées l'une sur l'autre est alignée avec un segment de droite qui relie la première partie d'extrémité (201) et la seconde partie d'extrémité (202), interposant la partie de préhension (21), de la partie de saisie (20).

2. L'outil électrique (1) de la revendication 1, dans lequel
le bloc-batterie (30) peut être fixé à la partie de saisie (20) et séparé de cette dernière.

3. L'outil électrique (1) des revendications 1 ou 2, dans lequel
un centre de gravité de l'outil électrique (1) est situé dans la partie de saisie (20).

4. L'outil électrique (1) de l'une quelconque des revendications 1 à 3, dans lequel
le bloc-batterie (30) est fixé à la section d'extrémité de la partie de saisie (20), la section d'extrémité étant située adjacente à un petit doigt de l'utilisateur qui saisit la partie de saisie (20).
